# EUROPÄISCHE PATENTANMELDUNG

(11) **EP 3 499 522 A1**
(43) Veröffentlichungstag der Anmeldung: **19.06.2019**
(21) Anmeldenummer: 18212877.7
(22) Anmeldetag: 17.12.2018
(51) Int. Cl.: H01F 7/02, A45C 13/00, F16B 13/00

(54) **MAGNETKUPPLUNG**

(30) Priorität: 18.12.2017 AT 4832017
(71) Anmelder: Höher, Gunter, 9800 Spittal (AT)
(72) Erfinder: Höher, Gunter, 9800 Spittal (AT)
(74) Vertreter: Beer & Partner Patentanwälte KG

(57) **Zusammenfassung**

Beschrieben wird eine Kupplung (1), umfassend einen als Magnet ausgebildeten ersten Körper (2) und einen als Kern ausgebildeten zweiten Körper (3) aus weichmagnetischem Werkstoff. Der zweite Körper (3) umfasst einen inneren Teilkern (5), der gegenüber einem äußeren Teilkern (4) in einem Durchgangsloch (6) des äußeren Teilkernes (4) aufgenommen und in seine vorstehende Stellung durch eine Feder (7) belastet ist. Beim Verbinden von Bauteilen mit Hilfe der Kupplung (1) wird zunächst die Stirnfläche (11) des inneren Teilkernes (5) an die gegenüberliegende Fläche (12) des ersten Körpers (2) angelegt und erst nach dem Justieren durch Ausrichten der Bauteile zueinander der zweite Körper (3) soweit auf den ersten Körper (2) hinbewegt, dass auch die Ringfläche (10) des äußeren Teilkernes (4) an dem ersten Körper (2) angelegt und eine endgültige Verbindung der Bauteile mit Hilfe von Magnetkräften erreicht ist.

## Beschreibung

Die Erfindung betrifft eine Kupplung mit den Merkmalen des Oberbegriffes von Anspruch 1.

Oft stellt sich das Problem, Bauteile miteinander auf einfache Art und Weise zu verbinden. Neben den klassischen Verbindungen durch mechanische Verbindungsmittel oder Klebstoffe sind auch Verbindungen in Form von Kupplungen, die wenigstens einen Magnet und einen Kern aus weichmagnetischem Werkstoff umfassen, bekannt.

Problematisch bei den bekannten Kupplungen der eingangs genannten Gattung ist es, dass wegen der hohen Magnetkräfte (diese sind ja oft erwünscht) ein nachträgliches Justieren der miteinander verbundenen Bauteile nur schwer möglich ist.

Der Erfindung liegt die Aufgabe zugrunde, eine Kupplung der eingangs genannten Gattung zur Verfügung zu stellen, welche ein einfaches Justieren der miteinander zu verbindenden Bauteile erlaubt.

Gelöst wird diese Aufgabe erfindungsgemäß mit einer Kupplung, welche die Merkmale von Anspruch 1 aufweist.

Bevorzugte und vorteilhafte Ausgestaltungen der erfindungsgemäßen Kupplung sind Gegenstand der abhängigen Ansprüche.

Bei der erfindungsgemäßen Kupplung genügt es, wenn entweder der erste Körper oder der zweite Körper ein Magnet ist oder einen Magnet umfasst, und der jeweils andere Körper wenigstens teilweise aus weichmagnetischem Werkstoff besteht.

Im Rahmen der Erfindung ist weiters in Betracht gezogen, dass beide Körper wenigstens teilweise Magnete sind, die an den Bauteilen, die miteinander mit Hilfe der erfindungsgemäßen Kupplung zu verbinden sind, so angeordnet sind, dass ungleiche Pole des ersten und des zweiten Körpers einander zugewandt sind.

Im Rahmen der Erfindung ist in Betracht gezogen, dass der erste und/oder der zweite Körper zur Gänze Magnete sind oder dass Magnete in einen den Körper bildenden Träger, der aus weichmagnetischem Werkstoff bestehen kann, eingesetzt sind.

Im Rahmen der Erfindung ist ebenfalls in Betracht gezogen, dass Körper, die keine Magnete sind, nur zum Teil aus weichmagnetischem Werkstoff bestehen. Dabei kann ein weichmagnetischer Bestandteil in einen Träger aus weitgehend beliebigem Werkstoff, wie Kunststoff, Holz oder Keramik, aufgenommen sein.

Da bei der erfindungsgemäßen Kupplung der als Kern ausgebildete zweite Körper aus zwei Teilkernen besteht, wovon ein Teilkern gegenüber dem anderen Teil verschiebbar ist, wird beim Verbinden von Bauteilen unter Anwendung der erfindungsgemäßen Kupplung zunächst nur der eine Teilkern an den ersten Körper angelegt und an diesem durch Magnetkräfte festgelegt, so dass ein Verschieben/Verdrehen der Bauteile zueinander, um diese in ihre richtige Lage zueinander zu justieren, möglich ist. Erst wenn der zweite Teilkern des zweiten Körpers auf dem ersten Körper anliegt und wegen der Magnetkräfte gehalten wird, ist eine endgültige, feste Verbindung der Bauteile gegeben.

In einer bevorzugten Ausführungsform der erfindungsgemäßen Kupplung ist vorgesehen, dass die dem ersten Körper zugewandte Fläche des verschiebbaren Teilkernes kleiner ist als die dem ersten Körper zugewandte Fläche des anderen Teilkernes.

So wird das erfindungsgemäße Ziel, dass zunächst ein Justieren der Bauteile möglich ist, besonders vorteilhaft erreicht.

Eine räumlich günstige Anordnung und Ausführungsform der erfindungsgemäßen Kupplung ergibt sich, wenn vorgesehen ist, dass der eine Teilkern in einem Durchgangsloch, das im anderen Teilkern vorgesehen ist, verschiebbar aufgenommen ist.

In der praktischen Anwendung der erfindungsgemäßen Kupplung ist es vorteilhaft, wenn vorgesehen ist, dass der verschiebbare Teilkern unter der Wirkung einer ihn in seine vorstehende Stellung belastenden Feder steht.

Weitere Einzelheiten und Merkmale der Erfindung ergeben sich aus der nachstehenden Beschreibung eines bevorzugten Ausführungsbeispiels anhand der Zeichnungen. Es zeigt:
- Fig. 1: eine erfindungsgemäße Kupplung in Seitenansicht,
- Fig. 2: die erfindungsgemäße Kupplung aus Fig. 1 im Axialschnitt längs der Linie A-A in Fig. 1 und die
- Fig. 3 bis 5: Stufen der Verwendung einer erfindungsgemäßen Kupplung.

Die erfindungsgemäße Kupplung 1 umfasst einen ersten Körper 2, der im Beispiel ein Magnet ist, und einen zweiten Körper 3, der im Beispiel ein Eisenkern ist.

Der erste Körper 2 kann ein bekannter Magnet aus magnetisiertem Werkstoff sein.

Der zweite Körper 3 besteht aus weichmagnetischem Werkstoff, beispielsweise Eisen, oder ist selbst als Magnet ausgebildet, der so ausgerichtet ist, dass zwischen seiner dem ersten Körper 2 zugekehrten Seite und dem zweiten Körper 3 eine ungleiche Polung vorliegt.

Der zweite Körper 3 umfasst zwei Teilkerne, nämlich einen äußeren Teilkern 4 und einen inneren Teilkern 5.

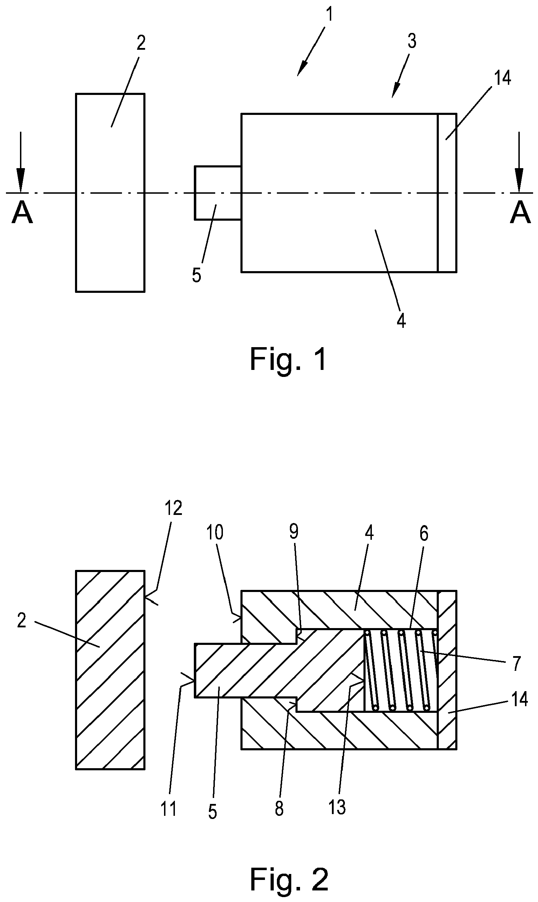

Der innere Teilkern 5 ist gegenüber dem äußeren Teilkern 4 verschiebbar, so dass er aus der in den Fig. 1 und 2 gezeigten, vorstehenden Stellung zurück in eine zur Gänze in dem äußeren Teilkern 4 aufgenommene Stellung zurückgeschoben werden kann. In dieser fluchtet die Ringfläche 10 des äußeren Teilkernes 4 mit der Stirnfläche 11 des inneren Teilkernes 5.

Im gezeigten Ausführungsbeispiel ist der Körper 3 rotationssymmetrisch ausgebildet und weist ein achsparalleles Durchgangsloch 6 auf. In dem Durchgangsloch 6 ist der Teilkern 5, insbesondere mit Gleitführung, verschiebbar aufgenommen.

Die in den Zeichnungen gezeigte, vorstehende Stellung des inneren Teilkerns 5 gegenüber dem äußeren Teilkern 4 wird durch eine Schulter 8 im Durchgangsloch 6 und eine Stufe 9 an der Außenfläche des inneren Teilkerns 5 definiert.

Zusätzlich ist bei der gezeigten Ausführungsform noch vorgesehen, dass der innere Teilkern 5 durch eine Feder 7, insbesondere eine Schraubenfeder, in die in den Fig. 1 und 2 gezeigte, vorgeschobene Stellung belastet ist. Die Feder 7 liegt an dem Ende 13 des inneren Teilkernes 5 an, das der dem ersten Körper 2 zugewandten Stirnfläche 11 gegenüberliegt. Die vorgeschobene Stellung des inneren Teilkernes 5 wird durch Anliegen der Schulter 8 im Durchgangsloch 6 an der Stufe 9 des Teilkernes 5 definiert.

Das Durchgangsloch 6 ist durch eine Verschlussplatte 14 verschlossen.

Die wie beschrieben ausgebildete, erfindungsgemäße Kupplung 1 kann mit Vorteil beispielsweise für das Verbinden von Bauteilen verwendet werden, wobei der erste Körper 2 an dem einen Bauteil und der zweite Körper 3 am anderen Bauteil befestigt, beispielsweise in Ausnehmungen in den Bauteilen (versenkt) eingesetzt wird. Zum Verbinden der Bauteile miteinander werden diese einander angenähert, wobei entweder der mit dem ersten Körper 2 versehene Bauteil dem mit dem zweiten Körper 3 versehenen Bauteil angenähert wird oder umgekehrt oder auch beide Bauteile bewegt werden, bis zunächst die Stirnfläche 11 des verschiebbaren Teilkerns 5 an der Fläche 12 des ersten Körpers 2 anliegt.

Sobald dies geschehen ist, kann die Lage der Bauteile zueinander verschoben werden, da der zweite Körper 3 nur mit der kleinen Stirnfläche 11 des inneren Teilkernes 5 am ersten Körper 2 anliegt, also die die Bauteile miteinander verbindenden Magnetkräfte noch nicht zur Gänze wirksam sind. Erst wenn die Bauteile - gegebenenfalls nach Justieren der Bauteile - die gewünschte Stellung zueinander eingenommen haben, wird der Bauteil, in welchem der zweite Körper 3 vorgesehen ist, dem Bauteil, in welchem der erste Körper 2 vorgesehen ist, angenähert (oder umgekehrt), so dass schlussendlich auch die Ringfläche 10 des äußeren Teilkernes 4 des zweiten Körpers 3 an der Fläche 12 des ersten Körpers 2 anliegt und eine sichere Verbindung der beiden Bauteile miteinander gewährleistet ist.

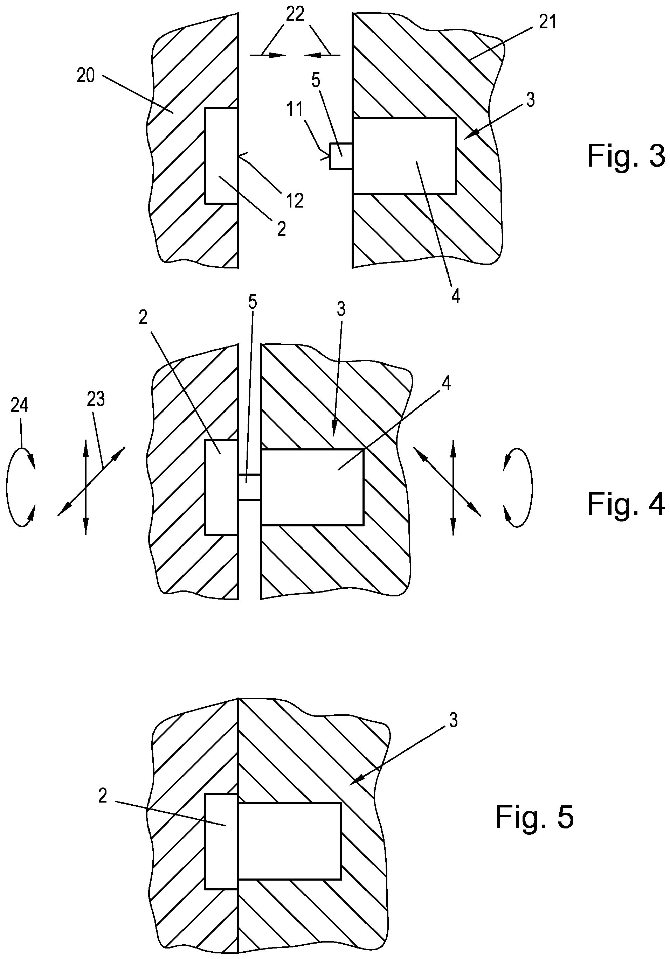

Fig. 3 zeigt die Ausgangssituation beim Verbinden von zwei Gegenständen (Bauteilen) 20 und 21 mit Hilfe einer erfindungsgemäßen Kupplung 1.

Der Körper 2 ist in eine Ausnehmung des einen Gegenstandes 20 eingesetzt und in dieser befestigt.

Der Kern 3 ist in eine Ausnehmung des anderen Gegenstandes 21 eingesetzt und in dieser befestigt. Es ist erkennbar, dass der innere Teilkern 5 mit seiner Stirnfläche 11 über die dem anderen Gegenstand 20 zugewandte Fläche des Gegenstandes 21 vorsteht.

Als nächster Schritt werden die Gegenstände 20 und 21 einander angenähert (Pfeile 22), bis die Situation, die in Fig. 4 gezeigt ist, erreicht ist. In dieser Situation liegt (nur) die Stirnfläche 11 des inneren Teilkernes 5 an der Fläche 12 des Körpers 2 an. Wegen der noch kleinen Haltekräfte können die Gegenstände 20 und 21 relativ zueinander bewegt, nämlich verschoben und/oder gedreht, werden (Pfeile 23 und 24).

Wenn die gewünschte Relativlage der Gegenstände 20 und 21 zueinander erreicht ist, werden die Gegenstände 20 und 21 einander weiter angenähert, bis die Situation, die in Fig. 5 gezeigt ist, erreicht ist. In dieser Situation liegt auch die Ringfläche 10 des äußeren Teilkernes 4 an dem Körper 2 an und die Gegenstände 20 und 21 sind miteinander verbunden.

Die erfindungsgemäße Kupplung 1 kann bei beliebigen, miteinander zu verbindenden Bauteilen oder Gegenständen, so auch bei mehrteiligen Gebilden aus Bauteilen, wie Kästen, Schränken, Aufbewahrungsstelen für Urnen und Ähnliches, eingesetzt werden. In jedem Fall ist der Vorteil gegeben, dass das Zusammenfügen der Bauteile zu dem (räumlichen) Gebilde einfach und sicher ist, wobei es möglich ist, die Gegenstände oder Bauteile, bevor sie endgültig miteinander verbunden sind, in die gewünschte Lage zueinander auszurichten.

Der Werkstoff der Bauteile 20 und 21 ist beliebig und umfasst Metalle, Kunststoffe und mineralische Werkstoffe (Glas, Stein, usw.).

Zusammenfassend kann ein Ausführungsbeispiel der Erfindung wie folgt beschrieben werden:
Beschrieben wird eine Kupplung 1, umfassend einen als Magnet ausgebildeten ersten Körper 2 und einen als Kern ausgebildeten zweiten Körper 3 aus weichmagnetischem Werkstoff. Der zweite Körper 3 umfasst einen inneren Teilkern 5, der gegenüber einem äußeren Teilkern 4 in einem Durchgangsloch 6 des äußeren Teilkernes 4 aufgenommen und in seine vorstehende Stellung durch eine Feder 7 belastet ist. Beim Verbinden von Bauteilen mit Hilfe der Kupplung 1 wird zunächst die Stirnfläche 11 des inneren Teilkernes 5 an die gegenüberliegende Fläche 12 des ersten Körpers 2 angelegt und erst nach dem Justieren durch Ausrichten der Bauteile zueinander der zweite Körper 3 soweit auf den ersten Körper 2 hinbewegt, dass auch die Ringfläche 10 des äußeren Teilkernes 4 an dem ersten Körper 2 angelegt und
eine endgültige Verbindung der Bauteile mit Hilfe von Magnetkräften erreicht ist.

## Patentansprüche

1. Kupplung zum Verbinden von Bauteilen, umfassend einen ersten, an einem der Bauteile anzuordnenden Körper (2) und einen zweiten, am anderen Bauteil anzuordnenden Körper (3), wobei wenigstens der erste Körper (2) und/oder der zweite Körper (3) magnetisch ist und wobei für den Fall, dass nur einer der Körper (2 oder 3) magnetisch ist, der jeweils andere Körper (3 oder 2) wenigstens teilweise aus weichmagnetischem Werkstoff besteht, **dadurch gekennzeichnet, dass** der zweite Körper (3) als Kern mit wenigstens zwei Teilkernen (4 und 5) ausgebildet ist, und dass einer (5) der Teilkerne (4 und 5) gegenüber dem anderen Teilkern (4) in eine vorstehende Stellung und wieder zurück verschiebbar ist.

2. Kupplung nach Anspruch 1, **dadurch gekennzeichnet, dass** der erste Körper (2) wenigstens teilweise ein Magnet ist und dass der zweite Körper (3) wenigstens teilweise aus weichmagnetischem Werkstoff besteht.

3. Kupplung nach Anspruch 1 oder 2, **dadurch gekennzeichnet, dass** die dem ersten Körper (2) zugewandte Fläche (11) des verschiebbaren Teilkernes (5) kleiner ist als die dem ersten Körper (2) zugewandte Fläche (12) des anderen Teilkernes (4).

4. Kupplung nach einem der Ansprüche 1 bis 3, **dadurch gekennzeichnet, dass** der eine Teilkern (5) in einem Durchgangsloch (6), das im anderen Teilkern (4) vorgesehen ist, verschiebbar aufgenommen ist.

5. Kupplung nach einem der Ansprüche 1 bis 4, **dadurch gekennzeichnet, dass** der verschiebbare Teilkern (5) unter der Wirkung einer ihn in seine vorstehende Stellung belastenden Feder (7) steht.

6. Kupplung nach einem der Ansprüche 1 bis 5, **dadurch gekennzeichnet, dass** das Durchgangsloch (6) gestuft ausgebildet ist und dass der verschiebbare Teilkern (5) in seiner vorstehenden Stellung mit einer Stufe (9) an der Schulter (8) im Durchgangsloch (6) anliegt.

7. Kupplung nach einem der Ansprüche 1 bis 6, **dadurch gekennzeichnet, dass** die dem ersten Körper (2) zugewandten Flächen (10, 11) der Teilkerne (4, 5) kongruent zu der dem Kern (3) zugewandten Fläche (12) des ersten Körpers (2) ausgebildet sind.

8. Kupplung nach Anspruch 7, **dadurch gekennzeichnet, dass** die Flächen (10, 11) eben sind.

9. Kupplung nach einem der Ansprüche 5 bis 8, **dadurch gekennzeichnet, dass** die Feder (7) in dem Durchgangsloch (6) aufgenommen ist.

10. Kupplung nach einem der Ansprüche 5 bis 9, **dadurch gekennzeichnet, dass** die Feder (7) eine Schraubenfeder ist.

11. Kupplung nach einem der Ansprüche 5 bis 10, **dadurch gekennzeichnet, dass** die Feder (7) an dem Ende 13 des verschiebbaren Teilkörpers (5), das der Stirnfläche (11) des Teilkörpers (5) gegenüberliegt, anliegt.

12. Kupplung nach einem der Ansprüche 3 bis 11, **dadurch gekennzeichnet, dass** der verschiebbare Teilkern (5) im Durchgangsloch (6) des anderen Teilkernes (4) mit Gleitführung aufgenommen ist.
